# EUROPÄISCHE PATENTSCHRIFT

(11) **EP 1 958 825 B1**
(45) Veröffentlichungstag und Bekanntmachung des Hinweises auf die Patenterteilung: **04.05.2011**
(21) Anmeldenummer: 07024139.3
(22) Anmeldetag: 12.12.2007
(51) Int. Cl.: B60R 13/02, F16B 5/06, F16B 21/08, F16B 21/18

(54) **Befestigungsvorrichtung**
Attachment device
Dispositif de fixation

(30) Priorität: 13.02.2007 DE 202007002071 U
(43) Veröffentlichungstag der Anmeldung: 20.08.2008
(73) Patentinhaber: TRW Automotive Electronics & Components GmbH, 78315 Radolfzell (DE)
(72) Erfinder: Jatzke, Stefan, 67280 Ebertsheim (DE); Hofmann, Jürgen, 67304 Eisenberg (DE); Loewe, Hubert, 66919 Weselberg (DE)
(74) Vertreter: Prinz & Partner

(56) Entgegenhaltungen:
- EP-A- 0 921 323
- DE-U1- 29 810 437

## Beschreibung

Die Erfindung betrifft eine Befestigungsvorrichtung zur Befestigung eines Plattenelements, insbesondere einer Tür- oder Wandverkleidung, an einem Träger, insbesondere einem Karosserieteil eines Kraftfahrzeugs, wobei die Befestigungsvorrichtung eine Vormontagestellung und eine Endmontagestellung einnehmen kann, mit einem Verbindungselement, das mit dem Plattenelement verbindbar ist und eine axiale Montagerichtung definiert, und einem Eingriffsteil zur Verriegelung der Befestigungsvorrichtung hinter einer Öffnung des Trägers.

Solche Befestigungsvorrichtungen sollen eine zuverlässige und möglichst dichte Verbindung zwischen einem Träger (Karosserieteil) und einem Plattenelement (Tür- oder Wandverkleidung) herstellen.

Aus der DE 298 10 437 U1 ist eine gattungsgemäße Befestigungsvorrichtung aus Kunststoff bekannt, die aus vier Einzelteilen aufgebaut ist: einem Verbindungselement mit einem an dem Plattenelement befestigbaren Oberteil und einem mit dem Träger verbindbaren Unterteil; einem in eine Öffnung des Trägers einlagerbaren Eingriffsteil, das von einem zwischen dem Oberteil und dem Unterteil vorgesehenen, halsförmig ausgebildeten Zwischenbereich mit Verrastungselementen durchsetzt ist; einem den Zwischenbereich oberhalb des Trägers umgebenden Zwischenteil (Hülsenteil), das mit den Verrastungselementen und mit dem Eingriffsteil verriegelbar ist; und einem zwischen dem Hülsenteil und dem Eingriffsteil angeordneten Dichtelement, das die Oberseite des Trägers beaufschlagt.

Für eine genaue Abstimmung der Ein- und Abzugskräfte bei der Montage bzw. Demontage schlägt die DE 200 17 376 U1 eine Befestigungsvorrichtung mit einem ähnlichen Aufbau vor, bei der in der Vormontagestellung ein erster Bereich und in der Endmontagestellung ein zweiter Bereich der Verrastungselemente mit Gegenrastelementen des Zwischenteils verriegelt ist, wobei in der Endmontagestellung durch einen Endbereich des Verbindungselements gleichzeitig die Spreizelemente des Eingriffsteils im Bereich der Öffnung des Karosserieteils gespreizt sind. Zudem ist ein fünftes Einzelteil vorgesehen, nämlich eine am Unterteil des Verbindungselements verrastete Kappe. In der Vormontagestellung umschließen die Umfangsbereiche der Kappe die unteren äußeren Abschnitte der Spreizelemente des Eingriffsteils, so daß die Befestigungsvorrichtung in die Trägeröffnung eingesetzt werden kann. Nach der Endmontage liegen die vorgenannten Abschnitte der Spreizelemente hinter der Trägeröffnung von der Umfangsfläche der Kappe entfernt und sorgen so für die Verriegelung der Befestigungsvorrichtung in der Trägeröffnung.

Aus der EP 0 921 323 A2 ist eine Vorrichtung zur Herstellung einer Verbindung zwischen einem Träger und einem Plattenelement bekannt, die ein an dem Plattenelement befestigbares Oberteil und ein mit dem Träger verbindbares Unterteil umfasst. Zwischen dem Oberteil und dem Unterteil ist ein mit Verrastungselementen versehener, halsförmig ausgebildeter Zwischenbereich vorgesehen, welcher ein in eine Trägeröffnung einlagerbares Eingriffsteil im vorderen Bereich durchsetzt und hinter der Trägeröffnung spreizt.

Aufgabe der Erfindung ist es, eine einfach aufgebaute Befestigungsvorrichtung zu schaffen, die leicht zusammenzubauen ist und eine leichte Montage ermöglicht.

Gelöst wird diese Aufgabe durch eine Befestigungsvorrichtung mit den Merkmalen des Anspruchs 1. Die Erfindung beruht auf der Erkenntnis, daß die Zahl der Einzelteile einer gattungsgemäßen Befestigungsvorrichtung reduziert werden kann, wenn bestimmte Funktionen, die bislang von separaten Einzelteilen bewerkstelligt wurden, ausschließlich vom Verbindungselement und dem Eingriffsteil übernommen werden können. Hierzu sieht die Erfindung vor, am Verbindungselement und am Eingriffsteil einstückig Funktionselemente anzuformen, die mit geeigneten Funktionselementen oder -bereichen des jeweils anderen Teils interagieren. Diese Maßnahme ermöglicht es, auf zusätzliche Einzelteile wie die bei der Befestigungsvorrichtung nach der DE 200 17 376 U1 notwendige Kappe oder das Zwischenteil zu verzichten. Dadurch können neben den Kosten für die Herstellung der Einzelteile auch die Fehlermöglichkeiten beim Zusammenbau der Befestigungsvorrichtung reduziert werden.

Gemäß der Erfindung sind die einstückig an das Verbindungselement angeformten Funktionselemente Halteelemente, und die zugeordneten Funktionselemente des Eingriffsteils sind Spreizelemente, wobei die Halteelemente in der Vormontagestellung die Spreizelemente in einem ungespreizten Zustand halten. Die an das Verbindungselement angeformten Halteelemente ersetzen die ansonsten erforderliche zusätzliche Kappe, die eigens am Verbindungselement angebracht werden mußte.

Um ein problemloses Einsetzen der Befestigungsvorrichtung in die Öffnung eines Trägers zu ermöglichen, ist vorgesehen, daß der Gesamtdurchmesser der Spreizelemente in der Vormontagestellung nicht größer als der Gesamtdurchmesser der Halteelemente ist.

Dies kann insbesondere dadurch erreicht werden, daß die Halteelemente in der Vormontagestellung die Spreizelemente in Einiagerungsbereichen hatten, die am Verbindungselement vorgesehen sind.

Bei einer bevorzugten Ausführungsform der Erfindung sind die Halteelemente endseitig am Verbindungselement angeordnete Pfeilsegmente. Eine solche Form eignet sich optimal für den vorgenannten Zweck.

Gemäß einem Aspekt der Erfindung sind die einstückig an das Eingriffsteil angeformten Funktionselemente Rastelemente, und der zugeordnete Funktionsbereich des Verbindungselements ist eine erste Nut, wobei die Rastelemente in der Vormontagestellung in die erste Nut eingreifen. Die Anordnung der Rastelemente direkt am Eingriffsteil macht ein Zwischenteil, an dem bei bisher bekannten Befestigungsvorrichtungen die Rastelemente angeformt waren, überflüssig. Es ist daher nicht erforderlich, ein solches Zwischenteil vorzusehen und mit dem Eingriffsteil zu verbinden.

Vorzugsweise sind die Rastelemente an einem zylindrischen Abschnitt des Rastelements gebildet, so daß sie direkt z.B. in umlaufende Nuten des Verbindungselements einrasten können.

Eine bevorzugte Ausführungsform sieht ferner ein Dichtungselement vor mit einem ersten Dichtabschnitt für eine axiale Abdichtung zum Träger, einem zweiten Dichtabschnitt für eine axiale Abdichtung zum Plattenelement und einem dritten Dichtabschnitt für eine radiale Abdichtung zum Verbindungselement.

Das Dichtungselement und das Eingriffsteil sind bevorzugt so ausgelegt, daß sich das Dichtungselement an einem scheibenförmigen Abschnitt des Eingriffsteils abstützt.

Die Erfindung wird nachfolgend anhand zweier Ausführungsbeispiele unter Bezugnahme auf die beigefügten Zeichnungen beschrieben. In den Zeichnungen zeigen:
- Figur 1 eine perspektivische Explosionsdarstellung einer erfindungsgemäßen Befestigungsvorrichtung;
- Figur 2 das Verbindungselement der Befestigungsvorrichtung in perspektivischer Ansicht;
- Figur 3 das Eingriffsteil der Befestigungsvorrichtung in perspektivischer Ansicht;
- Figur 4 das Dichtungsteil der Befestigungsvorrichtung in perspektivischer Ansicht;
- Figur 5 eine perspektivische Schnittansicht der Befestigungsvorrichtung aus Figur 1 in der Vormontagestellung;
- Figur 5a ein vergrößertes Detail der Figur 5;
- Figur 6 eine perspektivische Schnittansicht der Befestigungsvorrichtung aus Figur 1 in der Endmontagestellung;
- Figur 6a ein vergrößertes Detail der Figur 6;
- Figur 7 die Befestigungsvorrichtung aus Figur 1 in der Endmontagestellung in perspektivischer Ansicht;
- Figur 8 eine perspektivische Explosionsdarstellung einer erfindungsgemäßen Befestigungsvorrichtung nach einer anderen Ausführungsform;
- Figur 9 eine perspektivische Schnittansicht der Befestigungsvorrichtung aus Figur 8 in der Vormontagestellung;
- Figur 10 eine perspektivische Schnittansicht der Befestigungsvorrichtung aus Figur 8 in der Endmontagestellung; und
- Figur 11 die Befestigungsvorrichtung aus Figur 8 in der Endmontagestellung in perspektivischer Ansicht.

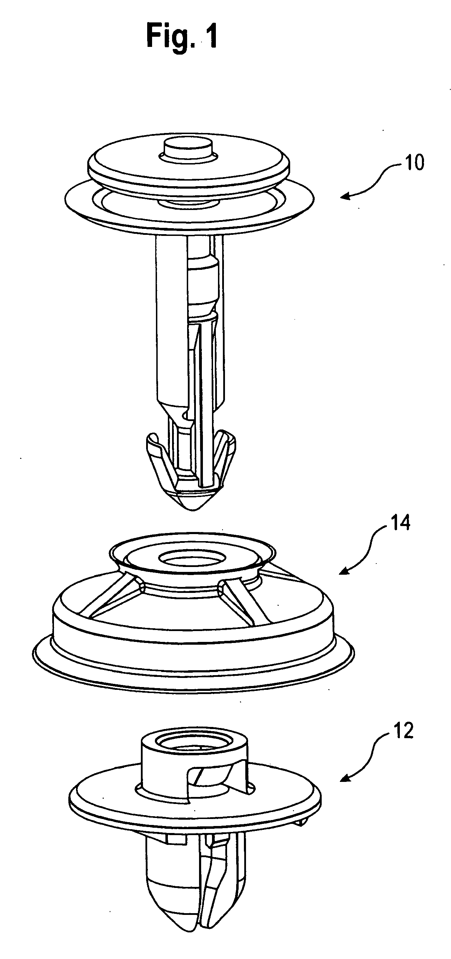

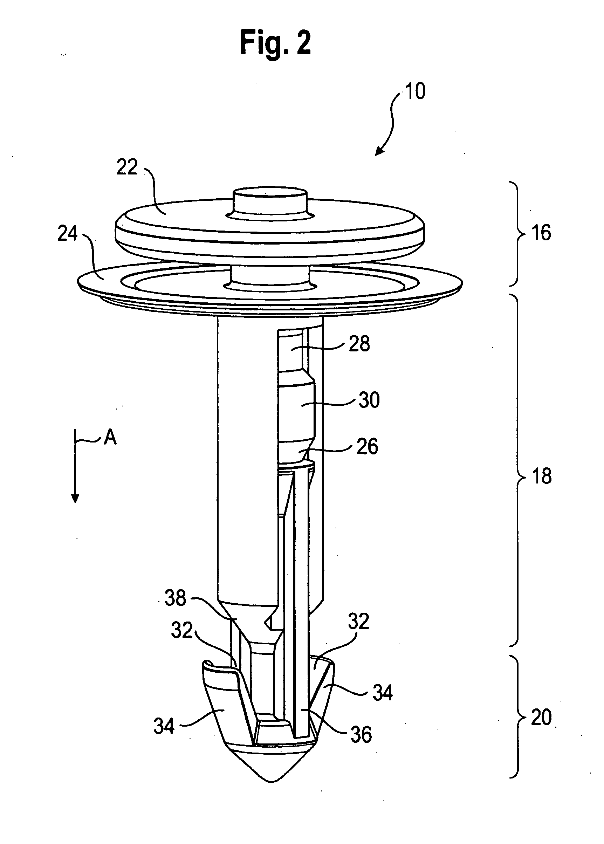

Die in Figur 1 dargestellte Befestigungsvorrichtung eignet sich insbesondere zur Befestigung einer Tür- oder Wandverkleidung an einem Karosserieteil eines Kraftfahrzeugs. Die Befestigungsvorrichtung besteht aus einem Verbindungselement 10, einem Eingriffsteil 12 und einem (optionalen) Dichtungselement 14, die jeweils aus Kunststoff gefertigt sind und in den Figuren 2, 3 und 4 einzeln im Detail gezeigt sind. Weitere Einzelteile sind für die Befestigungsvorrichtung nicht vorgesehen.

Das Verbindungselement 10 (Figur 2) definiert eine axiale Montagerichtung A und kann in einen Oberteil 16, einen Zwischenteil 18 und einen Unterteil 20 unterteilt werden. Der Oberteil 16 weist zwei axial beabstandete Radialflansche 22, 24 auf, die in ein (nicht dargestelltes) Verriegelungsteil (Retainer) der zu befestigenden Verkleidung einschiebbar sind. Der Zwischenteil 18 hat zwei umlaufende Nuten 26, 28, die durch einen Zwischenhals 30 voneinander getrennt sind. Der Unterteil 20 weist Einlagerungsbereiche 32 für Spreizelemente des Eingriffsteils 12 auf. Die Einlagerungsbereiche 32 sind durch endseitig am Unterteil 20 einstückig angeformte Halteelemente in Form von Pfeilsegmenten 34 begrenzt. Die Einlagerungsbereiche 32 sind durch Stege 36 voneinander getrennt. Nach oben schließt sich an die Einlagerungsbereiche 32 ein sich konisch aufweitender Abschnitt 38 zum Spreizen der Spreizelemente des Eingriffsteils 12 an.

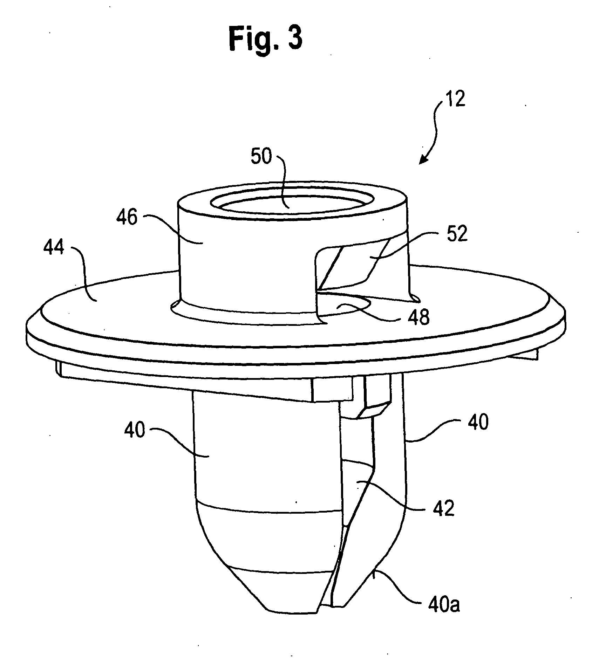

Das Eingriffsteil 12 (Figur 3) hat mehrere einander gegenüberliegende Spreizelemente 40, die konisch zulaufen und durch Schlitze 42 voneinander getrennt sind. Im dargestellten Ausführungsbeispiel sind zwei durch einen Schlitz 42 getrennte Funktionselemente in Form von Spreizelementen 40 vorgesehen. An die Spreizelemente 40 schließen sich ein scheibenförmiger Abschnitt 44 und ein zylindrischer Abschnitt 46 an. Sowohl der scheibenförmige Abschnitt 44 als auch der zylindrische Abschnitt 46 haben eine zentrale Öffnung 48 bzw. 50 für den Durchtritt des Verbindungselements 10. Der zylindrische Abschnitt 46 weist zudem radial nach innen gerichtete Rastelemente 52 auf, die als Funktionselemente dienen, wie später noch erläutert wird.

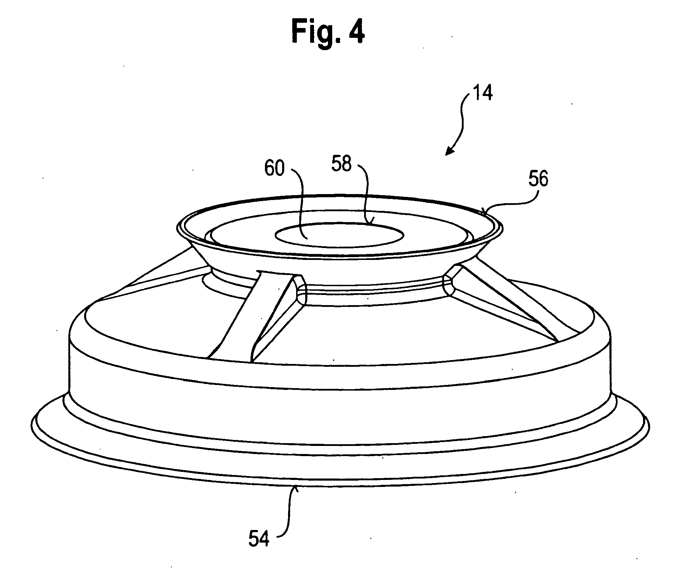

Das Dichtungselement 14 (Figur 4) weist einen ersten Dichtabschnitt 54 für eine axiale Abdichtung zum Karosserieteil, einen zweiten Dichtabschnitt 56 für eine axiale Abdichtung zum Verriegelungsteil der Verkleidung und einen dritten Dichtabschnitt 58 für eine radiale Abdichtung zum Verbindungselement 10 auf. Ebenso wie das Eingriffsteil 12 hat das Dichtungselement 14 eine zentrale Öffnung 60 für den Durchtritt des Verbindungselements 10.

Die Befestigungsvorrichtung ist so ausgelegt, daß sie eine Vormontagestellung und eine Endmontagestellung einnehmen kann. Die Vormontagestellung entspricht dem Lager- und Lieferzustand der Befestigungsvorrichtung, während die Endmontagestellung nach der Montage eine sichere Befestigung der Verkleidung am Karosserieteil gewährleistet.

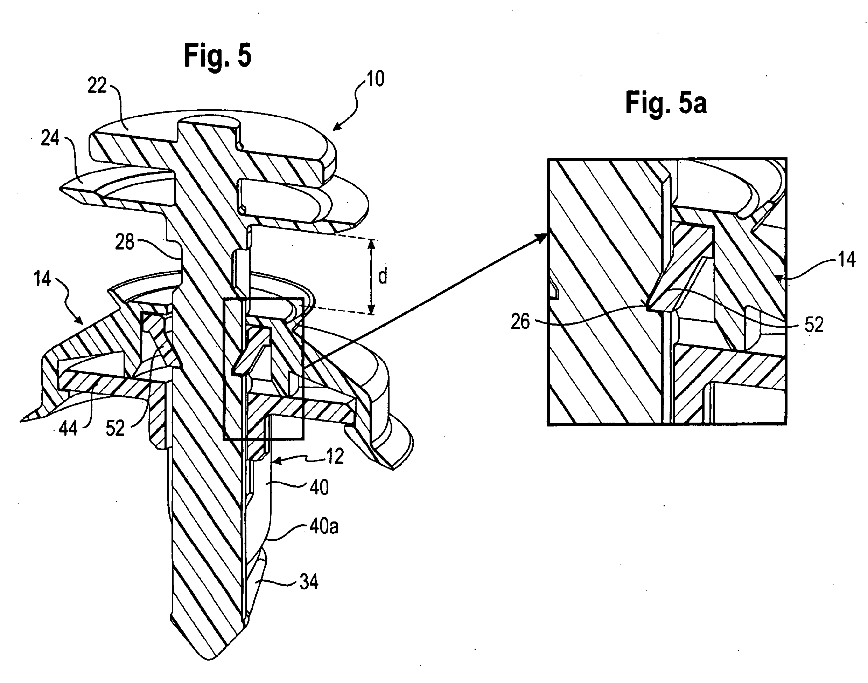

Die Vormontagestellung der Befestigungsvorrichtung ist in Figur 5 gezeigt. Das Dichtungselement 14 ist so auf das Eingriffsteil 12 aufgesetzt, daß es sich sowohl am scheibenförmigen Abschnitt 44 als auch am zylindrischen Abschnitt 46 des Eingriffsteils 12 abstützt. Das Verbindungselement 10 ist so weit durch die zentralen Öffnungen 48, 50, 60 eingeschoben, daß die Rastelemente 52 des Eingriffsteils 12 in der ersten Nut 26 des Verbindungselements 10 verrastet sind. Die erste Nut 26 dient somit als Funktionsbereich, der mit den Funktionselementen (Rastelemente 52) des Eingriffsteils 12 zusammenwirkt (siehe Figur 5a). Die Einzelteile der Befestigungsvorrichtung sind auf diese Weise unverlierbar miteinander verbunden und bilden eine lager- und transportfähige Einheit.

Zwischen der Unterseite des unteren Flansches 24 des Verbindungselements 10 und der Oberseite des Dichtungselements 14 liegt in der Vormontagestellung ein Abstand d vor. Die Spreizelemente 40 des Eingriffsteils 12 befinden sich in den Einlagerungsbereichen 32 des Verbindungselements 10, wobei die konisch zulaufenden unteren Abschnitte 40a der Spreizelemente 40 von den Pfeilsegmenten 34 des Verbindungselements zurückgehalten werden. Da die Spreizelemente 40 des Eingriffsteils 12 in diesem Zustand noch nicht gespreizt sind, läßt sich die Befestigungsvorrichtung in der Vormontagestellung in die Montageöffnung eines Karosserieteils einsetzen.

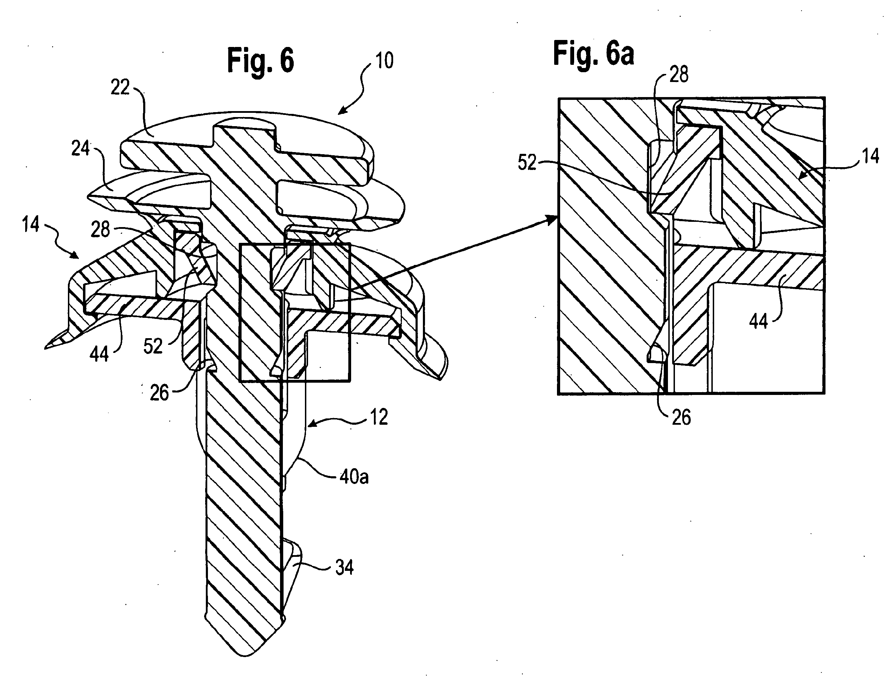

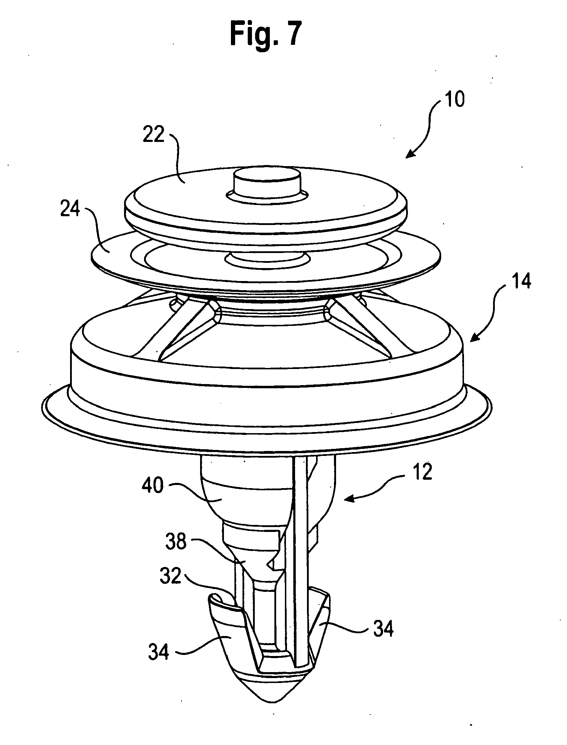

Wird nun auf die Befestigungsvorrichtung, genauer gesagt auf den Oberteil 16 des Verbindungselements 10, in der Montagerichtung A ein Druck ausgeübt, so bewegt sich das Verbindungselement 10 nach Überwindung der Haltekraft der Rastelemente 52 in besagte Richtung, bis die Rastelemente 52 in Eingriff mit der zweiten Nut 28 des Verbindungselements 10 gelangen, wie in den Figuren 6 und 6a gezeigt. Gleichzeitig treten die Spreizelemente 40 des Eingriffsteils 12 aus den Einlagerungsbereichen 32 aus und werden durch den konischen Abschnitt 38 des Verbindungselements 10 hinter der Öffnung des Karosserieteils gespreizt. Dies entspricht der Endmontagestellung der Befestigungsvorrichtung, die nochmals in Figur 7 dargestellt ist. In dieser Stellung ist die gesamte Befestigungsvorrichtung sicher in der Öffnung des Karosserieteils verriegelt, so daß eine zuverlässige Befestigung der Verkleidung über das zwischen den Flanschen 22, 24 gehaltene Verriegelungsteil am Karosserieteil gewährleistet ist. Das Dichtungselement 14 beaufschlagt in dieser Stellung die Oberseite des Karosserieteils und dichtet damit die Öffnung des Karosserieteils ab. Ebenso wie in der Vormontagestellung sind die Einzelteile 10, 12, 14 der Befestigungsvorrichtung funktionssicher miteinander verbunden.

Soll die Befestigungsvorrichtung wieder demontiert werden, so ist eine Zugwirkung auf das Verriegelungsteil der Verkleidung auszuüben. Dadurch treten die Rastelemente 52 des Eingriffsteils 12 aus der zweiten Nut 28 des Verbindungselements 10 aus und gelangen in die erste Nut 26. Gleichzeitig wird die Spreizung der Spreizelemente 40 aufgehoben, und diese lagern sich wieder in die Einlagerungsbereiche 32 des Verbindungselements 10 ein. Die gesamte Befestigungsvorrichtung kann damit aus der Öffnung des Karosserieteils entnommen werden, da der maximale Gesamtdurchmesser der Spreizelemente 40 in diesem Zustand nicht größer als der maximale Durchmesser der Pfeilsegmente 34 des Verbindungselements 10 ist.

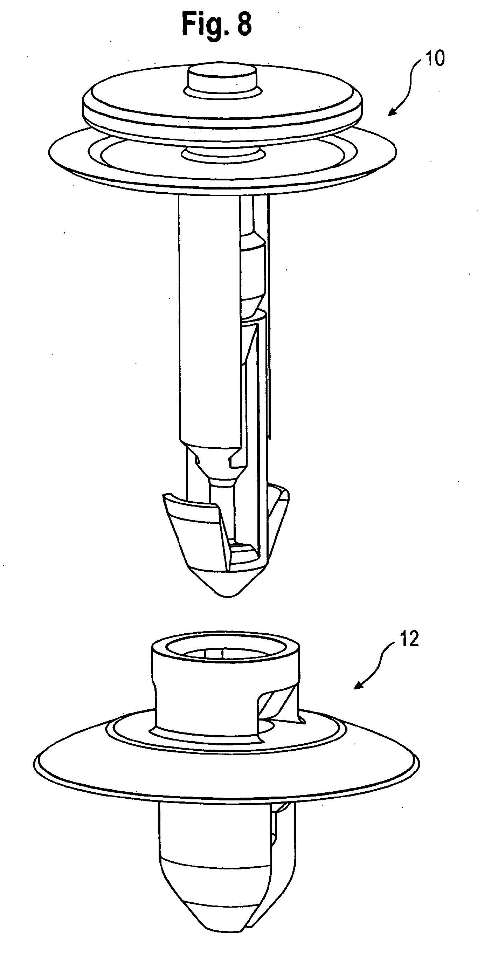

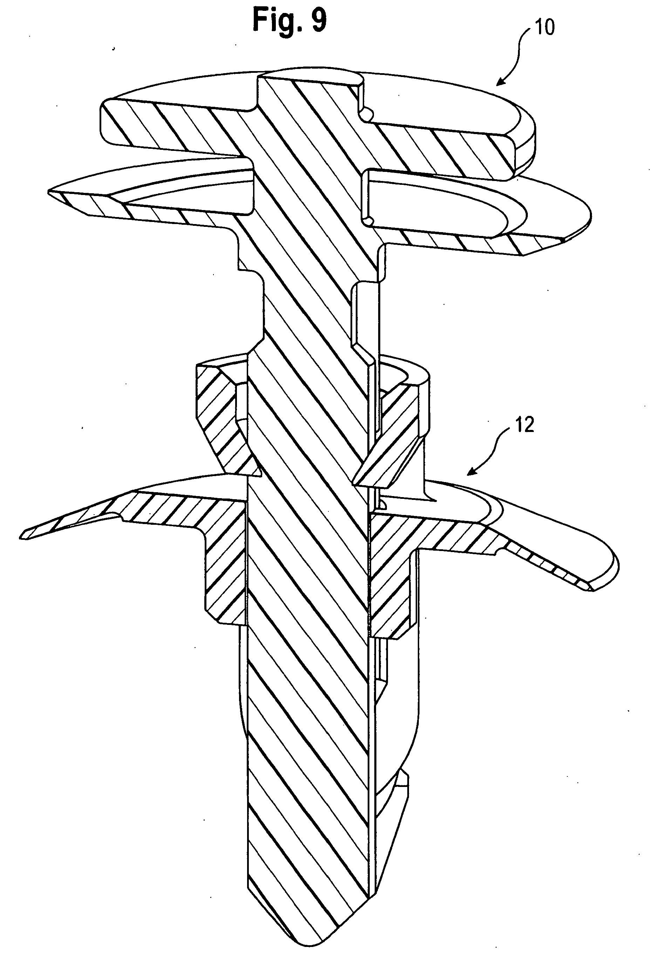

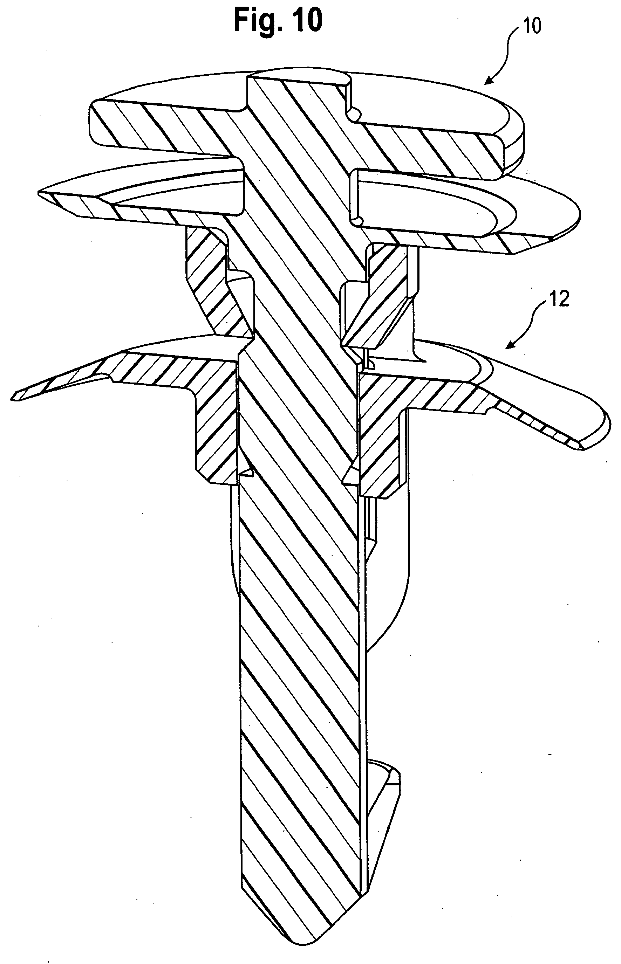

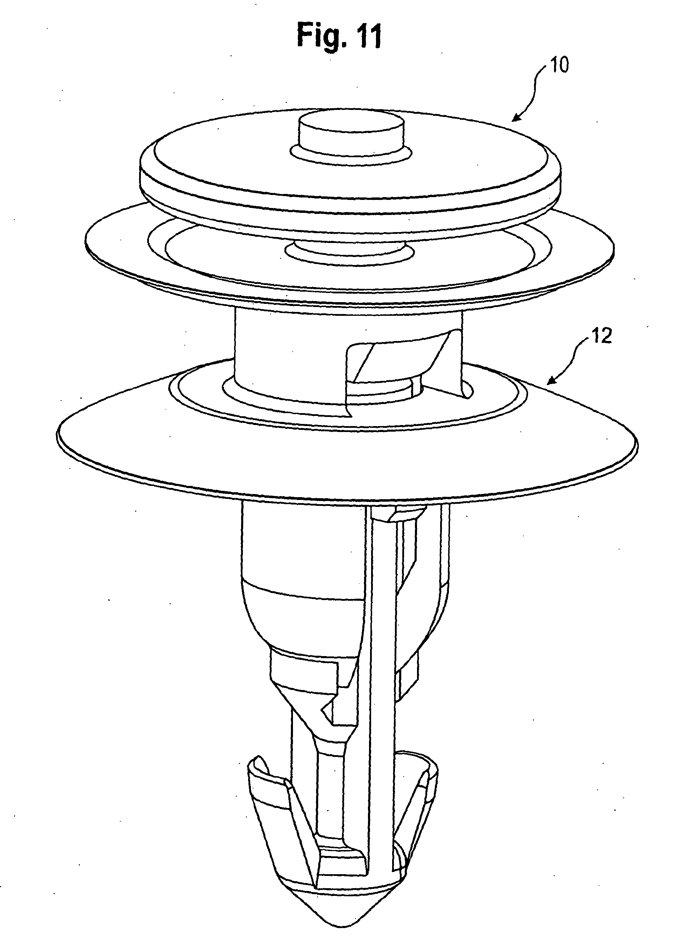

In den Figuren 8 bis 11 ist eine weitere Ausführungsform der Erfindung dargestellt. Diese Ausführungsform unterscheidet sich von der zuvor beschriebenen im wesentlichen dadurch, daß kein Dichtungselement vorgesehen ist. Aufbau und Funktion des Verbindungselements 10 und des Eingriffsteils 12 sind die gleichen wie bei der zuvor beschriebenen Ausführungsform. Einzelheiten der Montage gehen aus den Figuren 9 bis 11 hervor, die die Vormontagestellung (Figur 9) bzw. die Endmontagestellung (Figuren 10 und 11) zeigen.

Die Erfindung ist nicht auf die beschriebene Anwendung beschränkt. Vielmehr sind vielfältige Einsatzmöglichkeiten der erfindungsgemäßen Befestigungsvorrichtung in unterschiedlichen technischen Bereichen denkbar.

## Patentansprüche

1. Befestigungsvorrichtung zur Befestigung eines Plattenelements, insbesondere einer Tür- oder Wandverkleidung, an einem Träger, insbesondere einem Karosserieteil eines Kraftfahrzeugs, wobei die Befestigungsvorrichtung eine Vormontagestellung und eine Endmontagestellung einnehmen kann, mit
einem Verbindungselement (10), das mit dem Plattenelement verbindbar ist und eine axiale Montagerichtung (A) definiert, und
einem Eingriffsteil (12) zur Verriegelung der Befestigungsvorrichtung hinter einer Öffnung des Trägers,
**dadurch gekennzeichnet, daß**
sowohl das Verbindungselement (10) als auch das Eingriffsteil (12) einstückig angeformte Funktionselemente haben, die in der Vormontagestellung unmittelbar mit zugeordneten Funktionselementen oder -bereichen des Eingriffsteils (12) bzw. des Verbindungselements (10) zusammenwirken,
wobei die einstückig an das Verbindungselement (10) angeformten Funktionselemente Halteelemente (34) und die zugeordneten Funktionselemente des Eingriffsteils Spreizelemente (40) sind, und die Halteelemente (34) in der Vormontagestellung die Spreizelemente (40) in einem ungespreizten Zustand halten.

2. Befestigungsvorrichtung nach Anspruch 1, **dadurch gekennzeichnet, daß** der Gesamtdurchmesser der Spreizelemente (40) in der Vormontagestellung nicht größer als der Gesamtdurchmesser der Halteelemente (34) ist.

3. Befestigungsvorrichtung nach Anspruch 1 oder 2, **dadurch gekennzeichnet, daß** die Halteelemente endseitig am Verbindungselement (10) angeordnete Pfeilsegmente (34) sind.

4. Befestigungsvorrichtung nach einem der vorhergehenden Ansprüche, **dadurch gekennzeichnet, daß** die Halteelemente (34) in der Vormontagestellung die Spreizelemente (40) in Einlagerungsbereichen (32) halten, die am Verbindungselement (10) vorgesehen sind.

5. Befestigungsvorrichtung nach einem der vorhergehenden Ansprüche, **dadurch gekennzeichnet, daß** die einstückig an das Eingriffsteil (12) angeformten Funktionselemente Rastelemente (52) sind und der zugeordnete Funktionsbereich des Verbindungselements (10) eine erste Nut (26) ist, wobei die Rastelemente (52) in der Vormontagestellung in die erste Nut (26) eingreifen.

6. Befestigungsvorrichtung nach Anspruch 5, **dadurch gekennzeichnet, daß** die Rastelemente (52) an einem zylindrischen Abschnitt (46) des Eingriffsteils (12) gebildet sind.

7. Befestigungsvorrichtung nach einem der vorhergehenden Ansprüche, **dadurch gekennzeichnet, daß** ferner ein Dichtungselement (14) mit einem ersten Dichtabschnitt (54) für eine axiale Abdichtung zum Träger, einem zweiten Dichtabschnitt (56) für eine axiale Abdichtung zum Plattenelement und einem dritten Dichtabschnitt (58) für eine radiale Abdichtung zum Verbindungselement (10) vorgesehen ist.

8. Befestigungsvorrichtung nach Anspruch 7, **dadurch gekennzeichnet, daß** sich das Dichtungselement (14) an einem scheibenförmigen Abschnitt (44) des Eingriffsteils (12) abstützt.

## Claims

1. A fastening device for fastening a plate element, in particular a door or wall lining, to a carrier, in particular a body part of a motor vehicle, the fastening device being adapted to take a preassembly position and a final assembly position, the fastening device comprising
a connecting element (10) which can be connected with the plate element and defines an axial mounting direction (A), and
an engaging part (12) for locking the fastening device behind an opening of the carrier,
**characterized in that**
both the connecting element (10) and the engaging part (12) have integrally formed functional elements, which in the preassembly position directly cooperate with associated functional elements or regions of the engaging part (12) and of the connecting element (10), respectively,
the functional elements formed integrally with the connecting element (10) being holding elements (34) and the associated functional elements of the engaging part being spreading elements (40), and the holding elements (34) holding the spreading elements (40) in an unspread condition in the preassembly position.

2. The fastening device as claimed in claim 1, **characterized in that** in the preassembly position the total diameter of the spreading elements (40) is not greater than the total diameter of the holding elements (34).

3. The fastening device as claimed in claim 1 or 2, **characterized in that** the holding elements are arrow segments (34) disposed at the end of the connecting element (10).

4. The fastening device as claimed in any of the preceding claims, **characterized in that** in the preassembly position the holding elements (34) hold the spreading elements (40) in retaining regions (32) provided on the connecting element (10).

5. The fastening device as claimed in any of the preceding claims, **characterized in that** the functional elements formed integrally with the engaging part (12) are latching elements (52) and the associated functional region of the connecting element (10) is a first groove (26), the latching elements (52) engaging in the first groove (26) in the preassembly position.

6. The fastening device as claimed in claim 5, **characterized in that** the latching elements (52) are formed on a cylindrical portion (46) of the engaging part (12).

7. The fastening device as claimed in any of the preceding claims, **characterized in that** there is further provided a sealing element (14) having a first sealing portion (54) for axial sealing with respect to the carrier, a second sealing portion (56) for axial sealing with respect to the plate element, and a third sealing portion (58) for radial sealing with respect to the connecting element (10).

8. The fastening device as claimed in claim 7, **characterized in that** the sealing element (14) is supported by a disk-shaped portion (44) of the engaging part (12).

## Revendications

1. Dispositif de fixation pour fixer un élément en forme de plaque, en particulier un habillage de portière ou de paroi sur un support, en particulier sur une partie de carrosserie d'un véhicule automobile, le dispositif de fixation pouvant prendre une position de montage préalable et une position de montage finale, comportant
un élément de liaison (10) qui peut être relié à l'élément en forme de plaque et qui définit une direction de montage (A) axiale, et
une pièce d'engagement (12) pour verrouiller le dispositif de fixation derrière une ouverture du support,
**caractérisé en ce que**
tant l'élément de liaison (10) que la pièce d'engagement (12) ont des éléments fonctionnels façonnés d'un seul tenant qui, dans la position de montage préalable, coopèrent directement avec des éléments fonctionnels ou des zones fonctionnelles associé(e)s de la pièce d'engagement (12) ou de l'élément de liaison (10), respectivement,
les éléments fonctionnels façonnés d'un seul tenant sur l'élément de liaison (10) étant des éléments de retenue (34), et les éléments fonctionnels de la pièce de liaison associés étant des éléments d'écartement (40), et dans la position de montage préalable, les éléments de retenue (34) maintenant les éléments d'écartement (40) dans un état non écarté.

2. Dispositif de fixation selon la revendication 1, **caractérisé en ce que** le diamètre total des éléments d'écartement (40) n'est, dans la position de montage préalable, pas plus grand que le diamètre total des éléments de retenue (34).

3. Dispositif de fixation selon la revendication 1 ou 2, **caractérisé en ce que** les éléments de retenue sont des segments en forme de flèche (34) agencés côté extrémité sur l'élément de liaison (10).

4. Dispositif de fixation selon l'une quelconque des revendications précédentes, **caractérisé en ce que** les éléments de retenue (34) maintiennent, dans la position de montage préalable, les éléments d'écartement (40) dans des zones d'inclusion (32) qui sont prévus dans l'élément de liaison (10).

5. Dispositif de fixation selon l'une quelconque des revendications précédentes, **caractérisé en ce que** les éléments fonctionnels façonnés d'un seul tenant sur la pièce d'engagement (12) sont des éléments d'enclenchement (52), et la zone fonctionnelle associée, de l'élément de liaison (10) est une première gorge (26), les éléments d'enclenchement (52) s'engageant dans la première gorge (26) dans la position de montage préalable.

6. Dispositif de fixation selon la revendication 5, **caractérisé en ce que** les éléments d'enclenchement (52) sont formés sur un tronçon cylindrique (46) de la pièce d'engagement (12).

7. Dispositif de fixation selon l'une quelconque des revendications précédentes, **caractérisé en ce qu'**il est en outre prévu un élément d'étanchéité (14) avec un premier tronçon d'étanchéité (54) pour un étanchement axial par rapport au support, un deuxième tronçon d'étanchéité (56) pour un étanchement axial par rapport à l'élément en forme de plaque et un troisième tronçon d'étanchéité (58) pour un étanchement radial par rapport à l'élément de liaison (10).

8. Dispositif de fixation selon la revendication 7, **caractérisé en ce que** l'élément d'étanchéité (14) prend appui sur un tronçon (44) en forme de disque de la pièce d'engagement (12).
